# EUROPEAN PATENT APPLICATION

(11) **EP 4 525 292 A1**
(43) Date of publication of application: **19.03.2025**
(21) Application number: 22954315.2
(22) Date of filing: 09.08.2022
(51) Int. Cl.: H02M 7/12

(54) **CONTROL SYSTEM AND CONTROL METHOD FOR ENERGY STORAGE SYSTEM, AND ENERGY STORAGE SYSTEM**

(71) Applicant: Contemporary Amperex Technology Co., Limited, Ningde, Fujian 352100 (CN)
(72) Inventor: LIANG, Liliuyuan, Ningde, Fujian 352100 (CN); LU, Yanhua, Ningde, Fujian 352100 (CN); YU, Dongxu, Ningde, Fujian 352100 (CN); WU, Guoxiu, Ningde, Fujian 352100 (CN); XU, Xiangxiang, Ningde, Fujian 352100 (CN); LI, Meng, Ningde, Fujian 352100 (CN); LUO, Bingtuan, Ningde, Fujian 352100 (CN)
(74) Representative: Gong, Jinping
(86) International application number: PCT/CN2022/111168
(87) International publication number: WO 2024/031338

(57) **Abstract**

Provided are an energy storage system (100) and a control system (200) and a control method (300) of the energy storage system (100). The energy storage system (100) includes a converter valve (110) and an energy storage valve (120), the energy storage valve (120) is connected to a direct-current side of the converter valve (110), and the control system (200) includes: a coordination control subsystem (210), a converter valve control subsystem (220), and an energy storage valve control subsystem (230); the coordination control subsystem (210) is used for sending an instruction to control the converter valve control subsystem (220) and the energy storage valve control subsystem (230) to work; the converter valve control subsystem (220) is used for controlling, according to the instruction of the coordination control subsystem (210), the converter valve (110) to work; and the energy storage valve control subsystem (230) is used for controlling, according to the instruction of the coordination control subsystem (210), the energy storage valve (120) to work. The control system (200) of the energy storage system (100) is capable of realizing the cooperative control between the converter valve (110) and the energy storage valve (120).

## Description

### TECHNICAL FIELD

The present application relates to the field of power system energy storage technologies, and in particular to a control system of an energy storage system, a control method thereof, and an energy storage system.

### BACKGROUND

In the field of power system energy storage technologies, the new energy storage technology integrates a converter valve and an energy storage valve, which has advantages of high modularization, low system network loss, good economic benefits, and high operational reliability.

At present, the control architecture of a new energy storage system has not been studied.

### SUMMARY OF THE INVENTION

In view of this, embodiments of the present application provide a control system of an energy storage system, a control method thereof, and an energy storage system, which is capable of realizing cooperative control between a converter valve and an energy storage valve.

In a first aspect, a control system of an energy storage system is provided, the energy storage system includes a converter valve and an energy storage valve, the energy storage valve is connected to a direct-current side of the converter valve, and the control system includes: a coordination control subsystem, a converter valve control subsystem, and an energy storage valve control subsystem; the coordination control subsystem is used for sending an instruction to control the converter valve control subsystem and the energy storage valve control subsystem to work; the converter valve control subsystem is used for controlling, according to the instruction of the coordination control subsystem, the converter valve to work; and the energy storage valve control subsystem is used for controlling, according to the instruction of the coordination control subsystem, the energy storage valve to work.

In the present embodiment, the cooperative control between the converter valve and the energy storage valve is capable of being realized by the coordination control subsystem controlling the converter valve control subsystem and the energy storage valve control subsystem to work.

In a possible implementation manner, the converter valve includes N first power modules, and the converter valve control subsystem includes a converter valve control unit and N first power control units, wherein N is a positive integer. The converter valve control unit is used for generating, according to the instruction of the coordination control subsystem, K first control instructions for the N first power modules, wherein K is a positive integer less than or equal to N. The N first power control units are used for controlling, according to the K first control instructions, switching on or switching off of the N first power modules respectively.

In the present embodiment, the converter valve control unit and N first power control units are arranged for the N first power modules in the converter valve, and the converter valve control unit serving as an upper control unit of the N first power control units communicates with the coordination control subsystem, that is, the converter valve control subsystem adopts a hierarchical design and a modular design, which is easy to expand and integrate.

In a possible implementation manner, each first power control unit of the N first power control units is further used for uploading state information of the corresponding first power module to the converter valve control unit.

In the present embodiment, the state information of the first power module is uploaded to the converter valve control unit by the first power control unit, which is beneficial for the converter valve control unit to know the states of various first power modules in time, so that the reliability of system control can be ensured.

In a possible implementation manner, the converter valve control unit is further used for uploading valve control state information of the converter valve to the coordination control subsystem.

In the present embodiment, the valve control state information of the converter valve is uploaded to the coordination control subsystem by the converter valve control unit, which is beneficial for the coordination control subsystem to know the state of the converter valve in time, so as to better coordinate and control works of the converter valve and the energy storage valve, thereby being capable of ensuring the reliability of system control.

In a possible implementation manner, the energy storage valve includes M energy storage modules, each energy storage module of the M energy storage modules includes a second power module and a battery module, and the energy storage valve control subsystem includes an energy storage valve control unit, M second power control units, and M battery control units, wherein M is a positive integer. The energy storage valve control unit is used for generating, according to the instruction of the coordination control subsystem, Q second control instructions for the M second power modules in the M energy storage modules, wherein Q is a positive integer less than or equal to M. The M second power control units are used for controlling, according to the Q second control instructions, switching on or switching off of the M second power modules respectively. The M battery control units are used for performing charging and discharging control on the M battery modules in the M energy storage modules respectively.

In the present embodiment, the energy storage valve control unit, the M second power control units, and the M battery control units are arranged for the M second power modules and the M battery modules in the energy storage valve, and the energy storage valve control unit serving as an upper control unit of the M second power control units communicates with the coordination control subsystem, that is, the energy storage valve control subsystem adopts a hierarchical design and a modular design, which is easy to expand and integrate. In addition, the converter valve and the energy storage generator are controlled separately. The technology of the converter valve control subsystem is relatively mature. The energy storage valve control subsystem can be expanded and developed based on the converter valve control subsystem, which is easy for engineering implementation.

In a possible implementation manner, the energy storage valve control unit is further used for generating, according to the instruction of the coordination control subsystem, P third control instructions for the M battery modules, wherein P is a positive integer less than or equal to M. The M battery control units are used for performing, according to the P third control instructions, charging and discharging control on the M battery modules respectively.

In the present embodiment, the M battery control units can directly communicate with the energy storage valve control unit, which is beneficial for the second power control unit and the battery control unit to control the second power module and the battery module in parallel, thereby improving the control efficiency of the system.

In a possible implementation manner, each battery control unit of the M battery control units is further used for uploading state information of the corresponding battery module to the energy storage valve control unit.

In the present embodiment, the battery control unit uploads the state information of the corresponding battery module to the energy storage valve control unit, so that the energy storage valve control unit is capable of knowing the state of the battery module in time and controlling the battery module correspondingly, thereby ensuring the control reliability of the energy storage valve control subsystem.

In a possible implementation manner, the M second power control units are further used for generating, according to the Q second control instructions, R fourth control instructions for the M battery modules respectively, wherein R is a positive integer less than or equal to M. The M battery control units are used for performing, according to the R fourth control instructions, charging and discharging control on the M battery modules respectively.

In the present embodiment, the M battery control units are respectively controlled by the M second power control units, which can reduce the communication load of the energy storage valve control unit.

In a possible implementation manner, each battery control unit of the M battery control units is further used for uploading state information of the corresponding battery module to the corresponding second power control unit.

In the present embodiment, the battery control unit uploads the state information of the corresponding battery module to the second power control unit, so that the second power control unit is capable of feeding back the state of the battery module to the energy storage valve control unit in time and control the battery module correspondingly, thereby ensuring the control reliability of the energy storage valve control subsystem.

In a possible implementation manner, the energy storage valve control unit is further used for uploading valve control state information of the energy storage valve to the coordination control subsystem.

In the present embodiment, the valve control state information of the energy storage valve is uploaded to the coordination control subsystem by the energy storage valve control unit, which is beneficial for the coordination control subsystem to know the state of the energy storage valve in time, so as to better coordinate and control works of the energy storage valve and the energy storage valve, thereby being capable of ensuring the reliability of system control.

In a possible implementation manner, each second power control unit of the M second power control units is further used for uploading state information of the corresponding second power module to the energy storage valve control unit.

In the present embodiment, the state information of the second power module is uploaded to the energy storage valve control unit by the second power control unit, which is beneficial for the energy storage valve control unit to know the states of various second power modules in time, so that the reliability of system control can be ensured.

In a possible implementation manner, the second power control unit and the battery control unit corresponding to the same energy storage module communicate with each other.

In a possible implementation manner, the energy storage valve control subsystem further includes: a battery monitoring unit used for acquiring battery data of the M battery modules.

In a possible implementation manner, M is a positive integer greater than 1, and the M battery control units are in communication connection by using a daisy chain.

In a possible implementation manner, the converter valve control subsystem includes a plurality of converter valve control units, and each converter valve control unit in the plurality of converter valve control units communicates with the N first power control units, and the plurality of converter valve control units communicate with each other.

In the present embodiment, the converter valve control subsystem includes the plurality of converter valve control units, and the plurality of converter valve control units communicate with each other and all communicate with the N first power control units, which is capable of meeting requirements of a redundant design of the converter valve control subsystem, and ensuring the control reliability of the converter valve control subsystem.

In a possible implementation manner, the energy storage valve control subsystem includes a plurality of energy storage valve control units, and each energy storage valve control unit in the plurality of energy storage valve control units communicates with the M second power control units, and the plurality of energy storage valve control units communicate with each other.

In the present embodiment, the energy storage valve control subsystem includes the plurality of energy storage valve control units, and the plurality of energy storage valve control units communicate with each other and all communicate with the M second power control units, which is capable of meeting requirements of a redundant design of the energy storage valve control subsystem, and ensuring the control reliability of the energy storage valve control subsystem.

In a possible implementation manner, the coordination control subsystem includes a plurality of system control units, and each system control unit in the plurality of system control units communicates with the converter valve control subsystem and the energy storage valve control subsystem. The plurality of system control units communicate with each other.

In the present embodiment, the coordination control subsystem includes the plurality of system control units, and the plurality of system control units communicate with each other and all communicate with the converter valve control subsystem and the energy storage valve control subsystem, which is capable of meeting requirements of a redundant design of the coordination control subsystem, and ensuring the control reliability of the coordination control subsystem.

In a possible implementation manner, the converter valve control subsystem is integrated in the converter valve, and the energy storage valve control subsystem is integrated in the energy storage valve.

In a second aspect, an energy storage system is provided, including a converter valve and an energy storage valve, the energy storage valve is connected to a direct-current side of the converter valve, and the energy storage system further includes a control system in the first aspect and any possible implementation manner thereof.

In a third aspect, a control method of an energy storage system is provided. The energy storage system includes a converter valve and an energy storage valve. The energy storage valve is connected to a direct-current side of the converter valve. The control method includes: sending a first instruction to a converter valve control subsystem and sending a second instruction to an energy storage valve control subsystem, the first instruction being used for controlling the converter valve to work, and the second instruction being used for controlling the energy storage valve to work.

In a fourth aspect, a computer readable storage medium is provided, for storing a computer program, wherein the computer program causes a computer to perform the method in the first aspect and any possible implementation manner in the first aspect.

### DESCRIPTION OF DRAWINGS

In order to explain technical solutions of embodiments of the present application more clearly, a brief introduction of drawings to be used in the embodiments of the present application will be made below. Apparently, the drawings described below are merely some embodiments of the present application, and other drawings can be obtained according to these drawings by those skilled in the art without creative efforts.
Fig. 1 shows a schematic architectural diagram of a high-pressure direct-current direct-connected energy storage system to which embodiments of the present application are applicable.
Fig. 2 shows a schematic structural diagram of a VSC converter valve in Fig. 1.
Fig. 3 shows a schematic structural diagram of a direct-current energy storage valve in Fig. 1.
Fig. 4a shows a schematic structural diagram of an energy storage module in Fig. 3.
Fig. 4b shows another schematic structural diagram of the energy storage module in Fig. 3.
Fig. 5 shows a schematic architectural diagram of a control system according to an embodiment of the present application.
Fig. 6 shows a schematic block diagram of a converter valve control subsystem in the control system in Fig. 5.
Fig. 7 shows a schematic block diagram of an energy storage valve control subsystem in the control system in Fig. 5.
Fig. 8 shows another schematic architectural diagram of a control system according to an embodiment of the present application.
Fig. 9 shows still another schematic architectural diagram of a control system according to an embodiment of the present application.
Fig. 10 shows a schematic block diagram of a control method according to an embodiment of the present application.
Fig. 11 shows a schematic flow chart of a control method of an energy storage system according to an embodiment of the present application.

### DETAILED DESCRIPTION

The technical solutions in embodiments of the present application will be described clearly and completely through the accompanying drawings in the embodiments of the present application. Apparently, the described embodiments are merely a part of embodiments of the present application, and are not all the embodiments. Based on the embodiments of the present application, all other embodiments derived by a person of ordinary skill in the art without any creative effort shall all fall within the protection scope of the present application.

Unless otherwise defined, all technical and scientific terms used herein have the same meaning as commonly understood by those skilled in the art to which the present application belongs. The terms used herein are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The terms "first," "second," and the like in the description and claims of the present application or the above drawings are used to distinguish different objects, rather than to describe a specific sequence or primary-subordinate relationship.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the present application, it should be noted that the terms "connecting" and "connection" may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the field of power system energy storage technologies, the new energy storage technology integrates a converter valve and an energy storage valve, which has advantages of high modularization, low system network loss, good economic benefits, and high operational reliability. For example, by integrating the energy storage valve on a direct-current side of a voltage source converter (VSC) converter valve, AC-DC power conversion and energy storage can be realized simultaneously. Compared with the traditional energy storage technology, the new energy storage system has a higher voltage level, a larger capacity, and a stronger power grid regulation ability and power grid support function, and has important research significance for the new power system with new energy as a main body.

At present, the control architecture of a new energy storage system has not been studied.

In view of this, embodiments of the present application provide a control system of an energy storage system, which is capable of realizing cooperative control between a converter valve and an energy storage valve by a coordination control subsystem.

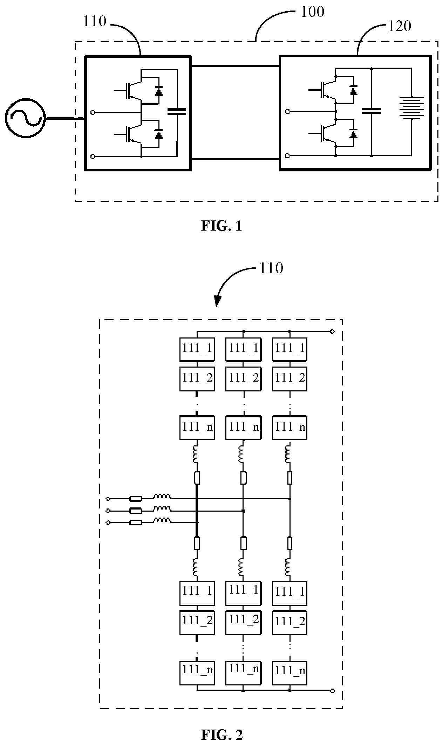

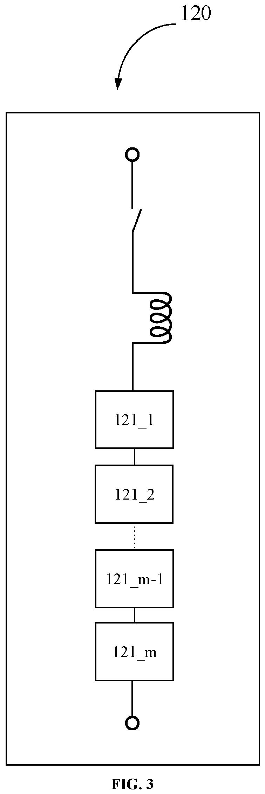

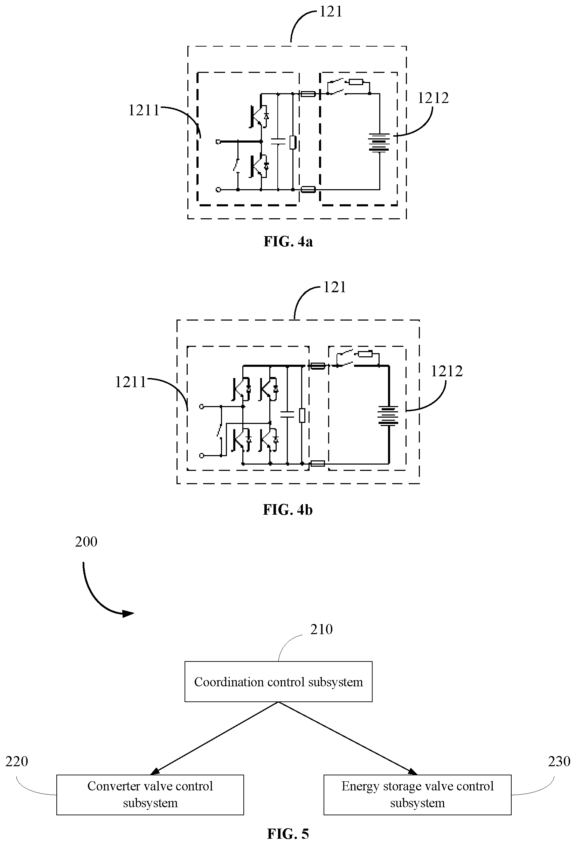

Fig. 1 shows a schematic architectural diagram of a high-pressure direct-current direct-connected energy storage system to which embodiments of the present application are applicable. As shown in Fig. 1, the high-voltage direct-current direct-connected energy storage system 100 includes a VSC converter valve 110 and an energy storage valve 120. The energy storage valve 120 is connected to a direct-current side of the VSC converter valve 110. Optionally, the VSC converter valve 110 may adopt an MMC structure as shown in Fig. 2. Specifically, as shown in Fig. 2, the VSC converter valve 110 may include 6 bridge arms, and every two bridge arms are connected in series. Each bridge arm includes n power modules (111_1, 111_2, ..., 111_n). As shown in Fig. 3, the energy storage valve 120 includes m energy storage modules 121 (121_1, 121_2, ..., 121_m-1, 121_m) connected in series. Each energy storage module 121 may be composed of a power module 1211 connected to a battery module 1212. Specifically, the power module 1211 may be a half-bridge power module as shown in Fig. 4a, or a full-bridge power module as shown in Fig. 4b. The battery module 1212 may be a single-branch series battery module, may also be a multi-branch parallel battery module, or may be a series-parallel battery module.

It should be noted that the control system of the energy storage system provided in the embodiment of the present application is not only applicable to the high-voltage direct-connected energy storage system 100 shown in Fig. 1, but also applicable to another energy storage system, such as a high-voltage alternating-current direct-connected energy storage system, which is not limited in the embodiment of the present application.

Fig. 5 shows a schematic block diagram of a control system 200 of an energy storage system according to an embodiment of the present application. Optionally, the energy storage system may be the high-voltage direct-current direct-connected energy storage system 100 described in Fig. 1. The energy storage system may include a converter valve and an energy storage valve, and the energy storage valve is connected to a direct-current side of the converter valve. For example, the energy storage valve may be connected in parallel to the direct-current side of the converter valve. As shown in Fig. 5, the control system 200 may include: a coordination control subsystem 210, a converter valve control subsystem 220, and an energy storage valve control subsystem 230. The coordination control subsystem 210 is used for sending an instruction to control the converter valve control subsystem 220 and the energy storage valve control subsystem 230 to work. The converter valve control subsystem 220 is used for controlling, according to the command of the coordination control subsystem 210, the converter valve to work, and the energy storage valve control subsystem 230 is used for controlling, according to the command of the coordination control subsystem 210, the energy storage valve to work.

Specifically, the coordination control subsystem 210 may be responsible for receiving an instruction from an upper control system of the control system 200, and coordinately controlling, based on the instruction of the upper control system, the converter valve control subsystem 220 and the energy storage valve control subsystem 230 to work. In other words, the coordination control subsystem 210 communicates with the converter valve control subsystem 220 and the energy storage valve control subsystem 230 respectively. For example, the coordination control subsystem 210 may issue an instruction to the converter valve control subsystem 220 to control the converter valve to work; and the coordination control subsystem 210 may also issue an instruction to the energy storage valve control subsystem 230 to control the energy storage valve to work.

In the present embodiment, the cooperative control between the converter valve and the energy storage valve is capable of being realized by the coordination control subsystem 210 controlling the converter valve control subsystem 220 and the energy storage valve control subsystem 230 to work.

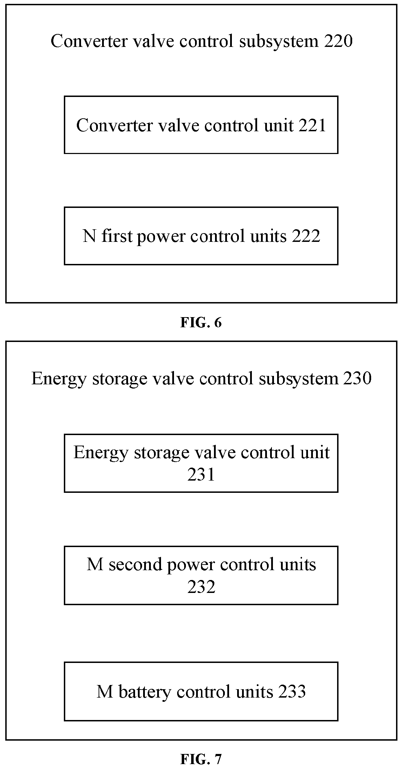

Optionally, in the embodiment of the present application, the converter valve includes N first power modules. Further, as shown in Fig. 6, the converter valve control subsystem 220 includes a converter valve control unit 221 and N first power control units 222, wherein N is a positive integer. The converter valve control unit 221 is used for generating, according to the instruction of the coordination control subsystem 210, K first control instructions for the N first power modules, wherein K is a positive integer less than or equal to N. The N first power control units 222 are used for controlling, according to the K first control instructions, switching on or switching off of the N first power modules respectively.

Specifically, the converter valve includes N first power modules, and the first power modules may be the power modules 111 shown in Fig. 2. In an example, the first power module may be the half-bridge power module 1211 as shown in Fig. 4a. In another example, the first power module may also be the full-bridge power module 1211 as shown in Fig. 4b. Optionally, the converter valve control subsystem 220 may include a converter valve control unit 221 and N first power control units 222. In other words, each first power module of the N first power modules corresponds to one first power control unit 222, and the N first power control units 222 correspond to a common converter valve control unit 221. The converter valve control unit 221 is responsible for receiving the instruction from the coordination control subsystem 210 and generating control instructions for the K first power modules. In one example, K is equal to N, that is, each first power module corresponds to a control instruction, each first power control unit 222 corresponds to a control instruction, and each first power control unit 222 of the N first power control units 222 is responsible for receiving the corresponding control instruction generated by the converter valve control unit 221 and controlling the corresponding first power module to work, for example, controlling switching on or switching off of the corresponding first power module. In another example, K is less than N, that is, only some first power control units 222 in the N first power control units 222 receive the control instructions, and this part of the first power control units 222 may, according to the received control instructions, control the corresponding first power modules to work, for example, control switching on or switching off of the corresponding first power modules. The other part of the first power control units 222 that have not received the control instructions may control the corresponding first power modules to be in a default state, for example, the default state is a switching off state, or, the default state is a switching on state.

In the present embodiment, the converter valve control unit 221 and N first power control units 222 are arranged for the N first power modules in the converter valve, and the converter valve control unit 221 serving as an upper control unit of the N first power control units 222 communicates with the coordination control subsystem 210, that is, the converter valve control subsystem 220 adopts a hierarchical design and a modular design, which is easy to expand and integrate.

Optionally, in the embodiment of the present application, each first power control unit 222 of the N first power control units 222 is further used for uploading state information of the corresponding first power module to the converter valve control unit 221.

Optionally, the state information of the first power module mainly includes states such as switching on, switching off, blocking, and fault. In other words, the state information of the first power module is used for indicating, to the converter valve control unit 221, which state the corresponding first power module is currently in, among switching on, switching off, blocking, and fault. Further, if the first power module is in a fault state, the state information of the first power module is further used for indicating a current fault of the corresponding first power module to the converter valve control unit 221.

In the present embodiment, the state information of the first power module is uploaded to the converter valve control unit 221 by the first power control unit 222, which is beneficial for the converter valve control unit 221 to know the states of various first power modules in time, so that the reliability of system control can be ensured.

Optionally, in the embodiment of the present application, the converter valve control unit 221 is further used for uploading valve control state information of the converter valve to the coordination control subsystem 210.

Optionally, the valve control state information of the converter valve mainly includes three states: blocking, fault, or running. In other words, the valve control state information is used for indicating, to the coordination control subsystem 210, which state the converter valve is currently in, among blocking, fault, and running. Further, if the converter valve is in a fault state, the valve control state information of the converter valve is further used for indicating a current fault of the converter valve to the coordination control subsystem 210.

Optionally, the converter valve control unit 221 may further determine the valve control state information of the converter valve based on the state information of the N first power modules reported by the N first power control units 222, and then report the determined valve control state information to the coordination control subsystem 210.

In the present embodiment, the valve control state information of the converter valve is uploaded to the coordination control subsystem 210 by the converter valve control unit 221, which is beneficial for the coordination control subsystem 210 to know the state of the converter valve in time, so as to better coordinate and control works of the converter valve and the energy storage valve, thereby being capable of ensuring the reliability of system control.

Optionally, in the embodiment of the present application, the converter valve control subsystem 220 includes a plurality of converter valve control units 221, and each converter valve control unit 221 in the plurality of converter valve control units 221 communicates with the N first power control units 222, and the plurality of converter valve control units 221 communicate with each other.

Optionally, the plurality of converter valve control units 221 can communicate with each other, exchange control information, and can switch between master and slave. In other words, one converter valve control unit 221 in the plurality of converter valve control units 221 is a master control unit, while the other converter valve control units 221 are slave control units. Once the master control unit fails, one control unit in the slave control units may be set as a master control unit.

It should be understood that the plurality of converter valve control units 221 may be integrated in different plug-ins in the same apparatus, and may also be arranged in different apparatuses. Similarly, the N first power control units 222 may be integrated in different plug-ins in the same apparatus, and may also be arranged in different apparatuses. In addition, the converter valve control unit 221 and the first power control unit 222 may be integrated in different plug-ins in the same apparatus, and may also be arranged in different apparatuses, which is not limited in the embodiment of the present application.

In the present embodiment, the converter valve control subsystem 220 includes the plurality of converter valve control units 221, and the plurality of converter valve control units 221 communicate with each other and all communicate with the N first power control units 222, which is capable of meeting requirements of a redundant design of the converter valve control subsystem 220, and ensuring the control reliability of the converter valve control subsystem 220.

Optionally, in the embodiment of the present application, the energy storage valve includes M energy storage modules, each energy storage module of the M energy storage modules includes a second power module and a battery module, wherein M is a positive integer. Further, as shown in Fig. 7, the energy storage valve control subsystem 230 includes an energy storage valve control unit 231, M second power control units 232, and M battery control units 233. The energy storage valve control unit 231 is used for generating, according to the instruction of the coordination control subsystem 210, Q second control instructions for the M second power modules in the M energy storage modules, wherein Q is a positive integer less than or equal to M. The M second power control units 232 are used for controlling, according to the Q second control instructions, switching on or switching off of the M second power modules respectively. The M battery control units 233 are used for performing charging and discharging control on the M battery modules in the M energy storage modules respectively.

Specifically, the energy storage valve includes M energy storage modules, each of the energy storage modules may be an energy storage module 121 as shown in Fig. 3, and each of the energy storage modules includes a second power module and a battery module connected in parallel. In other words, the energy storage valve includes M second power modules and M battery modules. In an example, the second power module may be the half-bridge power module 1211 as shown in Fig. 4a. In another example, the second power module may also be the full-bridge power module 1211 as shown in Fig. 4b. Optionally, the energy storage valve control subsystem 230 may include an energy storage valve control unit 231, M second power control units 232, and M battery control units 233. In other words, each second power module in the M second power modules corresponds to one second power control unit 232, each battery module in the M battery modules corresponds to one battery control unit 233, and the M second power control units 232 and the M battery control units 233 correspond to the common energy storage valve control unit 231. The energy storage valve control unit 231 is responsible for receiving the instruction from the coordination control subsystem 210 and generating control instructions for the Q second power modules. In one example, Q is equal to M, that is, each second power module corresponds to a control instruction, each second power control unit 232 corresponds to a control instruction, and each second power control units 232 of the M second power control units 232 is responsible for receiving the corresponding control instruction generated by the energy storage valve control unit 231 and controlling the corresponding second power module to work, for example, controlling switching on or switching off of the corresponding second power module. In another example, Q is less than M, that is, only some second power control units 232 in the M second power control units 232 receive the control instructions, and this part of the second power control units 232 may, according to the received control instructions, control the corresponding second power modules to work, for example, control switching on or switching off of the corresponding second power modules. The other part of the second power control units 232 that have not received the control instructions may control the corresponding second power modules to be in a default state, for example, the default state is a switching off state, or, the default state is a switching on state. In addition, each battery control unit 233 in the M battery control units 233 is used for controlling the corresponding battery module to work, for example, controlling the corresponding battery module to charge and discharge.

In the present embodiment, the energy storage valve control unit 231, the M second power control units 232, and the M battery control units 233 are arranged for the M second power modules and the M battery modules in the energy storage valve, and the energy storage valve control unit 231 serving as an upper control unit of the M second power control units 232 communicates with the coordination control subsystem 210, that is, the energy storage valve control subsystem 230 adopts a hierarchical design and a modular design, which is easy to expand and integrate. In addition, the converter valve and the energy storage generator are controlled separately. The technology of the converter valve control subsystem 220 is relatively mature. The energy storage valve control subsystem 230 can be expanded and developed based on the converter valve control subsystem 220, which is easy for engineering implementation.

It should be noted that the first power module and the second power module may be the same or different, which is not limited in the embodiment of the present application.

Optionally, in the embodiment of the present application, the energy storage valve control unit 231 is further used for generating, according to the instruction of the coordination control subsystem 210, P third control instructions for the M battery modules. P is a positive integer less than or equal to M, and the M battery control units 233 are used for performing, according to the P third control instructions, charging and discharging control on the M battery modules respectively.

In one example, P is equal to M, that is, each battery module corresponds to a control instruction, each battery control unit 233 corresponds to a control instruction, and each battery control unit 233 in the M battery control units 233 is responsible for receiving the corresponding control instruction generated by the energy storage valve control unit 231, and controlling the corresponding battery module to work, for example, controlling the corresponding battery module to charge and discharge. In another example, P is less than M, that is, only some battery control units 233 in the M battery control units 233 receive the control instructions, and this part of the battery control units 233 may, according to the received control instructions, control the corresponding battery modules to work, for example, control charging and discharging of the corresponding battery modules. The other part of the battery control units 233 that have not received the control instructions may control the corresponding battery modules to be in a default state, for example, it is default to be not charging, or it is default to be not discharging.

In the present embodiment, the M battery control units 233 can directly communicate with the energy storage valve control unit 231, which is beneficial for the second power control unit 232 and the battery control unit 233 to control the second power module and the battery module in parallel, thereby improving the control efficiency of the system.

Optionally, in the embodiment of the present application, each battery control unit 233 of the M battery control units 233 is further used for uploading state information of the corresponding battery module to the energy storage valve control unit 231.

Optionally, the state information of the battery module may include at least one battery parameter such as voltage, capacity, temperature, state of charge (SOC), temperature, and current of the battery module. Optionally, the state information of the battery module may also be a function of the above various battery parameters. The battery control unit 233 may upload the state information of the corresponding battery module according to requirements of the energy storage valve control unit 231. In other words, the battery control unit 233 just uploads required state information whichever state information the energy storage valve control unit 231 requires.

In the present embodiment, the battery control unit 233 uploads the state information of the corresponding battery module to the energy storage valve control unit 231, so that the energy storage valve control unit 231 is capable of knowing the state of the battery module in time and controlling the battery module correspondingly, thereby ensuring the control reliability of the energy storage valve control subsystem 230.

Optionally, in the embodiment of the present application, the M second power control units 232 are further used for generating, according to the M second control instructions, R fourth control instructions for the M battery modules respectively, wherein R is a positive integer less than or equal to M. The M battery control units 233 are used for performing, according to the R fourth control instructions, charging and discharging control on the M battery modules respectively.

In other words, the M battery control units 233 do not directly communicate with the energy storage valve control unit 231, but indirectly communicate with the energy storage valve control unit 231 through the M second power control units 232.

In one example, R is equal to M, that is, each battery module corresponds to a control instruction, each battery control unit 233 corresponds to a control instruction, and each battery control unit 233 in the M battery control units 233 is responsible for receiving the corresponding control instruction generated by the second power control unit 232, and controlling the corresponding battery module to work, for example, controlling the corresponding battery module to charge and discharge. In another example, R is less than M, that is, only some battery control units 233 in the M battery control units 233 receive the control instructions sent by the corresponding second power control units 232, and this part of the battery control units 233 may, according to the received control instructions, control the corresponding battery modules to work, for example, control charging and discharging of the corresponding battery modules. The other part of the battery control units 233 that have not received the control instructions may control the corresponding battery modules to be in a default state, for example, it is default to be not charging, or it is default to be not discharging.

In the present embodiment, the M battery control units 233 are respectively controlled by the M second power control units 232, which can reduce the communication load of the energy storage valve control unit 231.

Optionally, in the embodiment of the present application, each battery control unit 233 of the M battery control units 233 is further used for uploading state information of the corresponding battery module to the corresponding second power control unit 232.

Similar to the above embodiment, the state information of the battery module may include at least one battery parameter such as voltage, capacity, temperature, state of charge (SOC), temperature, and current of the battery module. Optionally, the state information of the battery module may also be a function of the above various battery parameters. The battery control unit 233 may upload the state information of the battery module to the second power control unit 232 according to the content of the fourth control instruction. That is, the battery control unit 233 can upload whatever information indicated by the fourth control instruction.

In the present embodiment, the battery control unit 233 uploads the state information of the corresponding battery module to the second power control unit 232, so that the second power control unit 232 is capable of feeding back the state of the battery module to the energy storage valve control unit 231 in time and control the battery module correspondingly, thereby ensuring the control reliability of the energy storage valve control subsystem 230.

Optionally, in the embodiment of the present application, each second power control unit 232 of the M second power control units 232 is further used for uploading state information of the corresponding second power module to the energy storage valve control unit 231.

Optionally, the state information of the second power module mainly includes states such as switching on, switching off, blocking, and fault. In other words, the state information of the second power module is used for indicating, to the energy storage valve control unit 231, which state the corresponding second power module is currently in, among switching on, switching off, blocking, and fault. Further, if the second power module is in a fault state, the state information of the second power module is further used for indicating a current fault of the corresponding second power module to the energy storage valve control unit 231.

In the present embodiment, the state information of the second power module is uploaded to the energy storage valve control unit 231 by the second power control unit 232, which is beneficial for the energy storage valve control unit 231 to know the states of various second power modules in time, so that the reliability of system control can be ensured.

Optionally, in the embodiment of the present application, the energy storage valve control unit 231 is further used for uploading valve control state information of the energy storage valve to the coordination control subsystem 210.

Optionally, the valve control state information of the energy storage valve mainly includes three states: blocking, fault, or running. In other words, the valve control state information is used for indicating, to the coordination control subsystem 210, which state the energy storage valve is currently in, among blocking, fault, and running. Further, if the energy storage valve is in a fault state, the valve control state information of the energy storage valve is further used for indicating a current fault of the energy storage valve to the coordination control subsystem 210.

Optionally, the energy storage valve control unit 231 may further determine the valve control state information of the energy storage valve based on the state information of the M second power modules reported by the M second power control units 232 and the state information of the M battery modules reported by the M battery control units 233, and then report the determined valve control state information to the coordination control subsystem 210.

In the present embodiment, the valve control state information of the energy storage valve is uploaded to the coordination control subsystem 210 by the energy storage valve control unit 231, which is beneficial for the coordination control subsystem 210 to know the state of the energy storage valve in time, so as to better coordinate and control works of the energy storage valve and the energy storage valve, thereby being capable of ensuring the reliability of system control.

Optionally, in the embodiment of the present application, the second power control unit 232 and the battery control unit 233 corresponding to the same energy storage module communicate with each other.

Optionally, in the embodiment of the present application, the energy storage valve control subsystem 230 further includes: a battery monitoring unit used for acquiring battery data of the M battery modules.

Optionally, the battery data may include all battery parameters such as voltage, capacity, temperature, state of charge (SOC), temperature, and current of the battery module. Moreover, the battery data is actively reported to the battery monitoring unit by the battery control unit 233.

In an example, each of the battery control units 233 may communicate with the battery monitoring unit, that is, each battery control unit 233 directly reports the battery data of the corresponding battery module to the battery monitoring unit.

In other examples, each of the battery control units 233 communicates by using a daisy chain, and only two battery control units 233 at the head and tail of the daisy chain communicate directly with the battery monitoring unit. That is, the two battery control units 233 at the head and tail of the daisy chain may summarize the battery data acquired by all the battery control units 233, and upload the summarized battery data to the battery monitoring unit.

Optionally, no matter which example the battery monitoring unit uses to acquire the battery data of the M battery modules, the M battery control units 233 may communicate with each other by using the daisy chain.

Optionally, in the present embodiment, the energy storage valve control subsystem 230 includes a plurality of energy storage valve control units 231, and each energy storage valve control unit 231 in the plurality of energy storage valve control units 231 communicates with the M second power control units 232, and the plurality of energy storage valve control units 232 communicate with each other.

Optionally, the plurality of energy storage valve control units 231 can communicate with each other, exchange control information, and can switch between master and slave. In other words, one energy storage valve control unit 231 in the plurality of energy storage valve control units 231 is a master control unit, while the other energy storage valve control units 231 are slave control units. Once the master control unit fails, one control unit in the slave control units may be set as a master control unit.

It should be understood that the plurality of energy storage valve control units 231 may be integrated in different plug-ins in the same apparatus, and may also be arranged in different apparatuses. Similarly, the M second power control units 232 may be integrated in different plug-ins in the same apparatus, and may also be arranged in different apparatuses. The M battery control units 233 may be integrated in different plug-ins in the same apparatus, and may also be arranged in different apparatuses. In addition, the energy storage valve control unit 231, the second power control unit 232, and the battery control unit 233 may be integrated in different plug-ins in the same apparatus, and may also be arranged in different apparatuses, which is not limited in the embodiment of the present application.

In the present embodiment, the energy storage valve control subsystem 230 includes the plurality of energy storage valve control units 231, and the plurality of energy storage valve control units 231 communicate with each other and all communicate with the M second power control units 232, which is capable of meeting requirements of a redundant design of the energy storage valve control subsystem 230, and ensuring the control reliability of the energy storage valve control subsystem 230.

Optionally, in the embodiment of the present application, the coordination control subsystem 210 includes a plurality of system control units, and each system control unit in the plurality of system control units communicates with the converter valve control subsystem 220 and the energy storage valve control subsystem 230. The plurality of system control units communicate with each other.

Optionally, the plurality of system control units can communicate with each other, exchange control information, and can switch between master and slave. In other words, one system control unit in the plurality of system control units is a master control unit, while the other system control units are slave control units. Once the master control unit fails, one control unit in the slave control units may be set as a master control unit.

It should be understood that, the plurality of system control units may be integrated in different plug-ins in the same apparatus, and may also be arranged in different apparatuses, which is not limited in the embodiment of the present application.

In the present embodiment, the coordination control subsystem 210 includes the plurality of system control units, and the plurality of system control units communicate with each other and all communicate with the converter valve control subsystem 220 and the energy storage valve control subsystem 230, which is capable of meeting requirements of a redundant design of the coordination control subsystem 210, and ensuring the control reliability of the coordination control subsystem 210.

Optionally, in the embodiment of the present application, the converter valve control subsystem 220 is integrated in the converter valve, and the energy storage valve control subsystem 230 is integrated in the energy storage valve.

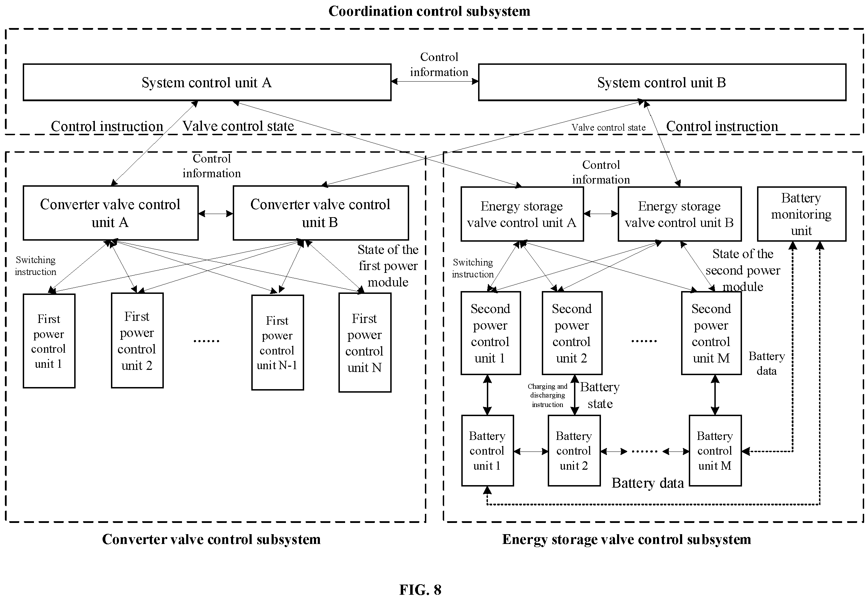

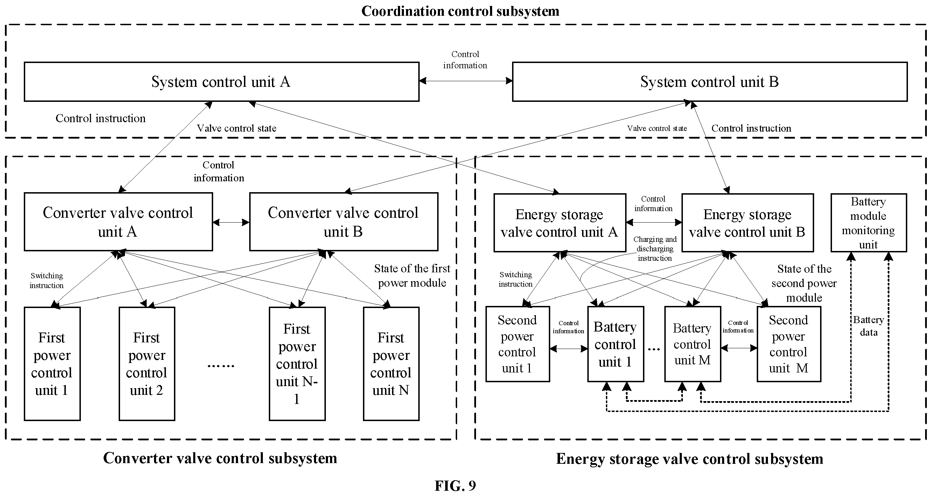

The control system of the energy storage system provided by the embodiment of the present application will be described in detail below with reference to Fig. 8 and Fig. 9.

Fig. 8 is a three-layer control architectural diagram of the energy storage valve control subsystem. As shown in Fig. 8, the control system includes a coordination control subsystem, a converter valve control subsystem, and an energy storage valve control subsystem. The coordination control subsystem includes a system control unit A and a system control unit B. The system control unit A and the system control unit B communicate with each other and exchange control information. The converter valve control subsystem includes two converter valve control units (a converter valve control unit A and a converter valve control unit B, and the converter valve control unit A and the converter valve control unit B communicate with each other and exchange control information) and N first power control units (a first power control unit 1, a first power control unit 2, ..., a first power control unit N-1, and a first power control unit N). The energy storage valve control subsystem includes N energy storage valve control units (an energy storage valve control unit A and an energy storage valve control unit B, the energy storage valve control unit A and the energy storage valve control unit B communicate with each other, and exchange control information), M second power control units (a second power control unit 1, a second power control unit 2, ..., and a second power control unit M), M battery control units (a battery control unit 1, a battery control unit 2, ..., and a battery control unit M), and a battery monitoring unit. The system control unit A generates a control instruction and sends it to the converter valve control unit A and the energy storage valve control unit A, and the system control unit B generates a control instruction and sends it to the converter valve control unit B and the energy storage valve control unit B. The converter valve control unit A and the converter valve control unit B send switching instructions to the first power control units 1-N according to the control instructions generated by the system control unit A and the system control unit B respectively, and the first power control units 1-N send the state of the controlled first power modules to the converter valve control unit A and the converter valve control unit B. The converter valve control unit A sends a valve control state of the converter valve to the system control unit A, and the converter valve control unit B sends the valve control state of the converter valve to the system control unit B. The energy storage valve control unit A and the energy storage valve control unit B send switching instructions to the second power control units 1-M according to the control instructions generated by the system control unit A and the system control unit B respectively, and the second power control units 1-M send the state of the second power module to the energy storage valve control unit A and the energy storage valve control unit B. The second power control units 1-M may also send charging and discharging instructions to the battery control units 1-M respectively. On the one hand, the battery control units 1-M control charging and discharging of the battery modules according to the charging and discharging instructions, and upload the battery states of the battery modules to the second power control units 1-M. On the other hand, the battery control units 1-M communicate with each other by using the daisy chain, and the battery data acquired by the battery control units 1-M is collected into the battery monitoring unit.

Fig. 9 is a two-layer control architectural diagram of the energy storage valve control subsystem. As shown in Fig. 9, the control system includes a coordination control subsystem, a converter valve control subsystem, and an energy storage valve control subsystem. The coordination control subsystem includes a system control unit A and a system control unit B. The system control unit A and the system control unit B communicate with each other and exchange control information. The converter valve control subsystem includes two converter valve control units (a converter valve control unit A and a converter valve control unit B, and the converter valve control unit A and the converter valve control unit B communicate with each other and exchange control information) and N first power control units (a first power control unit 1, a first power control unit 2, ..., a first power control unit N-1, and a first power control unit N). The energy storage valve control subsystem includes N energy storage valve control units (an energy storage valve control unit A and an energy storage valve control unit B, the energy storage valve control unit A and the energy storage valve control unit B communicate with each other, and exchange control information), M second power control units (a second power control unit 1, a second power control unit 2, ..., and a second power control unit M), M battery control units (a battery control unit 1, a battery control unit 2, ..., and a battery control unit M), and a battery monitoring unit. The system control unit A generates a control instruction and sends it to the converter valve control unit A and the energy storage valve control unit A, and the system control unit B generates a control instruction and sends it to the converter valve control unit B and the energy storage valve control unit B. The converter valve control unit A and the converter valve control unit B send switching instructions to the first power control units 1-N according to the control instructions generated by the system control unit A and the system control unit B respectively, and the first power control units 1-N send the state information of the controlled first power modules to the converter valve control unit A and the converter valve control unit B. According to the control instructions generated by the system control unit A and the system control unit B, the energy storage valve control unit A and the energy storage valve control unit B respectively send switching instructions to the second power control units 1-M and charging and discharging instructions to the battery control units 1-M. The second power control units 1-M send the state information of the second power modules to the energy storage valve control unit A and the energy storage valve control unit B. On the one hand, the battery control units 1-M control, according to the charging and discharging instructions, the battery modules to charge and discharge, and upload the battery states of the battery modules to the energy storage valve control unit A and the energy storage valve control unit B. On the other hand, the battery control units 1-M communicate with each other by using the daisy chain, and the battery data acquired by the battery control units 1-M is collected into the battery monitoring unit. In addition, the second power control unit and the battery control unit corresponding to the same energy storage module communicate with each other and exchange control information.

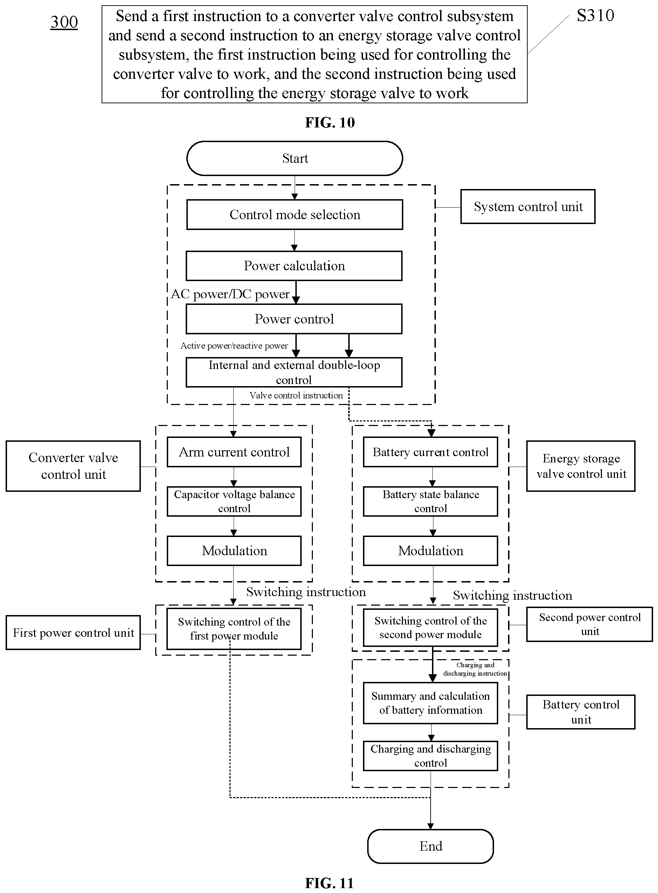

Fig. 10 shows a schematic block diagram of a control method 300 of an energy storage system according to an embodiment of the present application. The energy storage system includes a converter valve and an energy storage valve, and the energy storage valve is connected to a direct-current side of the converter valve. Optionally, the control method may be performed by the coordination control subsystem described above. As shown in Fig. 10, the control method 300 includes:
S310: Send a first instruction to a converter valve control subsystem and send a second instruction to an energy storage valve control subsystem, the first instruction being used for controlling the converter valve to work, and the second instruction being used for controlling the energy storage valve to work.

It should be noted that, for the content included in the control method 300, reference may be made to various steps performed by the coordination control subsystem 210 described above. Optionally, the control method 200 may also include various steps performed by the above converter valve subsystem 220 and the energy storage valve subsystem 230, which will not be repeated here for the sake of brevity.

FIG. 11 is a schematic flowchart of a control method of an energy storage system of a control architecture shown in FIG. 8. Specifically, the control method includes: (1), determining, by a system control unit in a coordination control subsystem, valve control instructions of a converter valve and an energy storage valve in different control modes sequentially by control mode selection, power calculation, power control (AC power/DC power), and internal and external double-loop control (active power/reactive power); (2), completing, by a converter valve control unit, bridge arm current control as well as capacitor voltage balance control and modulation in a converter valve control subsystem, and generating switching instructions for first power modules in the converter valve; (3) completing switching control on first power control units by the first power control units in the converter valve control subsystem; (4) completing, by the energy storage valve control unit, battery current control as well as battery state balance control and modulation in the energy storage valve control subsystem, and generating switching instructions for first power modules in the energy storage valve; (5) then completing switching control on second power modules by second power control units in the energy storage valve control subsystem; and (6) finally, controlling, by a battery control unit in the energy storage valve control subsystem according to charging and discharging instructions generated by the second power control unit, battery modules in the energy storage valve to charge and discharge, and completing battery information summary and calculation of the battery modules at the same time.

It should be understood that in the various embodiments of the present application, sequence numbers of the above various processes do not mean the priority of a performing sequence, the order in which the processes are performed shall be determined by their functions and intrinsic logic, and shall not constitute any limitation to the implementation process of the embodiments of the present application.

An embodiment of the present application further provides a computer readable storage medium, for storing a computer program.

Optionally, the computer readable storage medium may be applied to the control system in the embodiments of the present application, and the computer program causes a computer to perform corresponding processes implemented by the control system in the methods of the embodiments of the present application, which are not elaborated for the sake of brevity.

An embodiment of the present application further provides a computer program product, including a computer program instruction.

Optionally, the computer program product may be applied to the control system in the embodiments of the present application, and the computer program instruction causes a computer to perform corresponding processes implemented by the control system in the methods of the embodiments of the present application, which are not elaborated for the sake of brevity.

An embodiment of the present application further provides a computer program.

Optionally, the computer program may be applied to the control system in the embodiments of the present application, and the computer program, when running in a computer, causes the computer to perform corresponding processes implemented by the control system in the methods of the embodiments of the present application, which are not elaborated for the sake of brevity.

Optionally, an embodiment of the present application further provides an energy storage system. The energy storage system includes a converter valve and an energy storage valve, the energy storage valve is connected to a direct-current side of the converter valve, and the high-voltage direct-connected energy storage system may further include the control system described in various embodiments above.

Optionally, in the embodiment of the present application, the converter valve is a VSC converter valve.

Further, in the embodiment of the present application, the VSC converter valve adopts a modular multilevel converter (MMC) structure.

The above descriptions are merely specific implementation manners of the present application, the protection scope of the present application is not limited thereto, and variations or replacements that can easily derived by those skilled in the art without departing from the technical scope disclosed in the present application shall fall within the protection scope of the present application. Therefore, the protection scope of the present application shall subject to the protection scope of the claims.

## Claims

1. A control system of an energy storage system, wherein the energy storage system comprises a converter valve and an energy storage valve, the energy storage valve is connected to a direct-current side of the converter valve, and the control system comprises: a coordination control subsystem, a converter valve control subsystem, and an energy storage valve control subsystem;
the coordination control subsystem is used for sending an instruction to control the converter valve control subsystem and the energy storage valve control subsystem to work;
the converter valve control subsystem is used for controlling, according to the instruction of the coordination control subsystem, the converter valve to work; and
the energy storage valve control subsystem is used for controlling, according to the instruction of the coordination control subsystem, the energy storage valve to work.

2. The control system according to claim 1, wherein the converter valve comprises N first power modules, and the converter valve control subsystem comprises a converter valve control unit and N first power control units, wherein N is a positive integer;
the converter valve control unit is used for generating, according to the instruction of the coordination control subsystem, K first control instructions for the N first power modules, wherein K is a positive integer less than or equal to N; and
the N first power control units are used for controlling, according to the K first control instructions, switching on or switching off of the N first power modules respectively.

3. The control system according to claim 2, wherein each first power control unit of the N first power control units is further used for uploading state information of the corresponding first power module to the converter valve control unit.

4. The control system according to claim 2 or 3, wherein the converter valve control unit is further used for uploading valve control state information of the converter valve to the coordination control subsystem.

5. The control system according to any one of claims 1 to 4, wherein the energy storage valve comprises M energy storage modules, each energy storage module of the M energy storage modules comprises a second power module and a battery module, the energy storage valve control subsystem comprises an energy storage valve control unit, M second power control units, and M battery control units, wherein M is a positive integer;
the energy storage valve control unit is used for generating, according to the instruction of the coordination control subsystem, Q second control instructions for the M second power modules in the M energy storage modules, wherein Q is a positive integer less than or equal to M;
the M second power control units are used for controlling, according to the Q second control instructions, switching on or switching off of the M second power modules respectively; and
the M battery control units are used for performing charging and discharging control on the M battery modules in the M energy storage modules respectively.

6. The control system according to claim 5, wherein the energy storage valve control unit is further used for generating, according to the instruction of the coordination control subsystem, P third control instructions for the M battery modules, wherein P is a positive integer less than or equal to M; and the M battery control units are used for performing, according to the P third control instructions, charging and discharging control on the M battery modules respectively.

7. The control system according to claim 6, wherein each battery control unit of the M battery control units is further used for uploading state information of the corresponding battery module to the energy storage valve control unit.

8. The control system according to claim 5, wherein the M second power control units are further used for generating, according to the Q second control instructions, R fourth control instructions for the M battery modules respectively, wherein R is a positive integer less than or equal to M; and the M battery control units are used for performing, according to the R fourth control instructions, charging and discharging control on the M battery modules respectively.

9. The control system according to claim 8, wherein each battery control unit of the M battery control units is further used for uploading state information of the corresponding battery module to the corresponding second power control unit.

10. The control system according to any one of claims 5 to 9, wherein the energy storage valve control unit is further used for uploading valve control state information of the energy storage valve to the coordination control subsystem.

11. The control system according to any one of claims 5 to 10, wherein each second power control unit of the M second power control units is further used for uploading state information of the corresponding second power module to the energy storage valve control unit.

12. The control system according to any one of claims 5 to 11, wherein the second power control unit and the battery control unit corresponding to the same energy storage module communicate with each other.

13. The control system according to any one of claims 5 to 12, wherein the energy storage valve control subsystem further comprises:
a battery monitoring unit used for acquiring battery data of the M battery modules.

14. The control system according to any one of claims 5 to 13, wherein M is a positive integer greater than 1, and the M battery control units are in communication connection by using a daisy chain.

15. The control system according to any one of claims 2 to 4, wherein the converter valve control subsystem comprises a plurality of converter valve control units, and each converter valve control unit in the plurality of converter valve control units communicates with the N first power control units, and the plurality of converter valve control units communicate with each other.

16. The control system according to any one of claims 5 to 14, wherein the energy storage valve control subsystem comprises a plurality of energy storage valve control units, and each energy storage valve control unit in the plurality of energy storage valve control units communicates with the M second power control units, and the plurality of energy storage valve control units communicate with each other.

17. The control system according to any one of claims 1 to 16, wherein the coordination control subsystem comprises a plurality of system control units, each system control unit in the plurality of system control units communicates with the converter valve control subsystem and the energy storage valve control subsystem, and the plurality of system control units communicate with each other.

18. The control system according to any one of claims 1 to 17, wherein the converter valve control subsystem is integrated in the converter valve, and the energy storage valve control subsystem is integrated in the energy storage valve.

19. An energy storage system, comprising a converter valve and an energy storage valve, wherein the energy storage valve is connected to a direct-current side of the converter valve, and the energy storage system further comprises the control system according to any one of claims 1 to 18.

20. A control method of an energy storage system, wherein the energy storage system comprises a converter valve and an energy storage valve, the energy storage valve is connected to a direct-current side of the converter valve, and the control method comprises:
sending a first instruction to a converter valve control subsystem and sending a second instruction to an energy storage valve control subsystem, the first instruction being used for controlling the converter valve to work, and the second instruction being used for controlling the energy storage valve to work.
